Europäisches Patentamt

(19) European Patent Office

Office européen des brevets

(11) Publication number: **0 030 803**
A1

(12) # EUROPEAN PATENT APPLICATION

(21) Application number: **80304216.7**

(22) Date of filing: **25.11.80**

(51) Int. Cl.³: **C 02 F 1/40**
**C 09 K 3/32, C 02 F 1/28**
**C 02 F 3/00, B 01 J 20/02**

(30) Priority: **05.12.79 GB 7941953**

(43) Date of publication of application:
**24.06.81 Bulletin 81'25**

(84) Designated Contracting States:
**DE FR GB IT**

(71) Applicant: **SERCK INDUSTRIES LIMITED**
Warwick Road
Birmingham B11 2QY(GB)

(72) Inventor: **Cappi, James Brian**
'Chesapeake' Moor Court Amberley
Stroud Gloucestershire(GB)

(74) Representative: **Cuddon, George Desmond**
MARKS & CLERK Alpha Tower A.T.V. Centre
Birmingham B1 1TT(GB)

(54) Apparatus and method for treating an aqueous effluent which contains suspended oil particles.

(57) The apparatus has a first filter stage 10 provided by a relatively coarse layer 15 of anthracite particles superimposed on a relatively finer layer 16 of garnet particles. Liquid leaving the first filter stage 10 is passed through a biological percolating filter column 13 to an outlet line 14. Successive flow of the effluent through the layers 15, 16 is particularly effective to remove oil which the column 13 would have difficulty in treating.

EP 0 030 803 A1

The invention relates to apparatus and processes for treating aqueous effluent to reduce the oil content thereof.

It is known from UK patent 1449342 to carry out treatment of aqueous effluent which includes suspended oil particles by passing the effluent first through a sand filter to reduce the oil content, and subsequently through a biological percolating filter which reduces the biological oxygen demand (BOD) of the effluent.

Since the size of a biological filter required to achieve a given BOD and outlet oil content is dependent on the oil content of the inlet liquid it is desirable that the first filtration stage shall have the highest attainable efficiency, in terms of oil removed from a given aqueous effluent, consistent with a desired rate of effluent throughput and constraints of size of the filter apparatus. In particular, suspended oil droplets can have adverse effects on the performance of the biological percolating filter, mainly as a result of coating the biological filter components with an oil film.

In many operating conditions limitations may be imposed on the permissible size of the filter apparatus as a whole. Improving the efficiency of the first filtration stage reduces both the load on the biological filter and the aforesaid adverse effects thereon. The aforesaid improvement in efficiency also allows the sizes of the biological and/or first stage filters to be reduced. Alternatively, for filters of a given size a better filtration is obtainable.

It is an object of the present invention to provide a process for treating aqueous effluent having suspended oil particles in which the efficiency of the first filtration stage is higher than that attainable by known processes, or alternatively to provide a process having a first filtration step in which an efficiency corresponding to that of known processes is attainable by an apparatus of smaller size than is required for known processes.

According to the invention an apparatus for treating an aqueous effluent which contains suspended oil, comprises a first filter material consisting essentially of relatively coarser particles, a second filter material consisting essentially of relatively finer particles, a biological percolating filter arrangement, and means for passing said effluent successively through said first and second filter materials and subsequently through said biological filter arrangement.

According to another aspect of the invention a method of treating an aqueous effluent which contains suspended oil comprises passing said effluent successively through a first, relatively coarser, particulate material, through a second, relatively finer, particulate material, and subsequently through a biological filter arrangement.

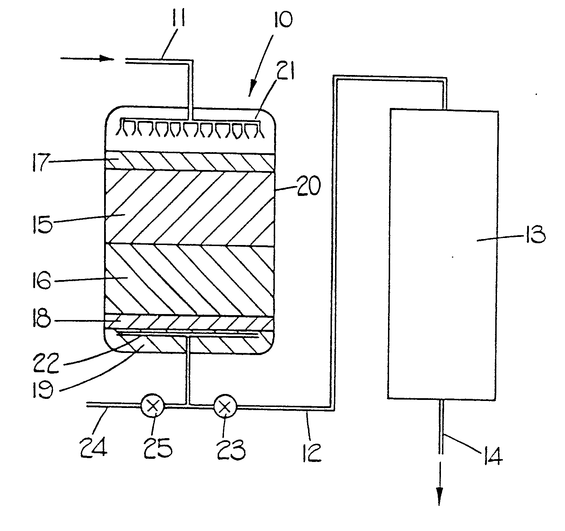

An embodiment of the invention will now be more particularly described by way of example only and with reference to the accompanying drawing which shows a treatment apparatus diagrammatically.

As shown in the drawing the apparatus comprises a first filter stage 10 for reducing the oil content of an aqueous effluent supplied through a pipe 11. Liquid leaving the first filter stage 10 is supplied through a pipe 12 to a biological percolating filter column 13, of a known type, from which filtered liquid is drawn through an outlet 14.

The first filter stage 10 comprises at least two layers of filter material, through which the effluent passes downwardly. A layer 15 of anthracite having a particle   size of between .5mm and 3mm is super-imposed on a layer 16 of
garnet having a particle size of between .25mm and 1mm.
In general, the linear dimensions of the anthracite
particles are between 1.1 and 3 times those of the garnet
particles. One or more additional layers of filter
material, as for example, of conventional sand, may be interposed between the garnet and anthracite. Additionally
a particulate filter material 17 whose specific gravity is
less than that of anthracite may be super-imposed thereon.
The anthracite layer 15 provides a coarse filter which first
removes the larger oil particles, and the garnet layer 16
provides a fine filter which subsequently removes the
smaller oil particles. Suspended solids in the effluent
are also removed by the layers 15, 16.

The layer 16 rests on a relatively shallow layer 18
of coarse garnet particles, which are in turn supported
by a layer 19 of gravel, the purpose of the layer 18 being
to prevent the fine particles in the layer 16 from migrating
into the gravel layer 19. The layers 15 to 19 are contained
within a vessel 20 to which the effluent is delivered through
a spreader 21 in such a way as to be delivered evenly over
the whole cross-section of the layers 15, 16 normal to the
direction of effluent flow. The liquid is removed from the
vessel 20 through an array of collector pipes 22, of a
known type, which are located within the gravel layer 19.
The thicknesses of the respective layers 15, 16 of garnet
and anthracite, as well as the particle sizes of these
materials, are selected according to the anticipated operating conditions, as for example the oil content and size
of oil particles in the effluent to be treated. The cross-
section of the filter layers 15, 16 is such that effluent
is delivered thereto at between 2.125 and 13 litres/minute/
sq. metre of cross-sectional area.

The aforesaid filter layers require backwashing to
remove accumulated deposits and this may be effected in
a known manner by shutting a valve 23 in the line 12 and supplying backwash liquid through a pipe 24 and a valve 25.
It has been found that the differences between the specific
gravities of garnet, anthracite, gravel, and any material
in the layer 17, as well as the different particle sizes
of the layers 16, 18 serves to keep all of the layers 15 to
19 separate during backwashing.

The apparatus and process of the present invention
have been found to provide substantial operating advantages
over known oil-reducing liquid treatment systems. In
particular the relatively larger particles in the layer 15
have been found to cause suspended oil droplets to coalesce
and be retained in this layer, the relatively finer particles in the layer 16 acting to trap the smaller droplets of
oil remaining. Additionally, the use of anthracite in the
layer 15 has been found to improve the coalescing action
of this layer, since anthracite is more readily wetted by
oil than the silica sand previously used for filters of
this type.

With typical values of suspended oil content in the
input liquid, the aforesaid coalescing action has been
found to permit a higher throughput of liquid through the
apparatus that has proved possible with single-material
first-stage filters, consistent with maintaining a predetermined acceptable level of suspended oil content in
the liquid in the pipe 12. Typically such a level is
between 5 and 15 p.p.m., but these values may vary in dependence on the composition of the effluent being treated.

It has also been found that in the apparatus of the
present invention, sudden increases in either the rate of
effluent flow or of the oil content of this effluent,
have less effect on the oil content of the water in the
pipe 12.

The apparatus of the present invention is thus more

0030803

effective than known sand filters in providing the comple-
mentary oil-removing effect described in UK patent 1449342.

0030803

CLAIMS

1.     An apparatus for treating an aqueous effluent which contains suspended oil particles, said apparatus comprising a first filter stage (10) and a second biological filter stage (13) through which the effluent is successively passed, characterised in that the first filter stage (10) comprises a first filter material (15) of relatively coarser particles and a second filter material (16) of relatively finer particles through which said effluent is passed in succession.

2.     An apparatus as claimed in claim 1 characterised in that said first filter material (15) has a specific gravity less than that of said second filter material (16).

3.     An apparatus as claimed in claim 1 characterised in that said first material (15) is anthracite and said second material (16) is garnet.

4.     An apparatus as claimed in claim 3 characterised in that said anthracite has a particle size of between .5mm and 3mm.

5.     An apparatus as claimed in claim 4 characterised in that said garnet has a particle size of between .25mm and 1mm.

6.     An apparatus as claimed in claim 3 characterised in that the linear dimensions of the anthracite particles are between 1.1 and 3 times those of the garnet particles.

7.  A method of treating an aqueous effluent which contains suspended oil particles, comprising passing said effluent successively through a first filter stage (10) and a second, biological filter stage (13) characterised in that in said first filter stage (10) the effluent is successively passed through a first filter material (15) of relatively coarser particles and subsequently through a second filter material (16) of relatively finer particles.

European Patent Office

**EUROPEAN SEARCH REPORT**

Application number

EP 80304216.7

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| D | GB - A - 1 449 342 (THE BRITISH) + Totality; especially page 2, lines 63-69, 108; page 3, example + | 1,7 | C 02 F 1/40<br>C 09 K 3/32<br>C 02 F 1/28<br>C 02 F 3/00<br>B 01 J 20/02 |
| A | LOUIS DE VRIES "English-German Technical and Engineering Dictionary" first edition, 1954 GRAW-HILL PUBLISHING COMPANY LIMITED, New York-London-Toronto + Page 387, right column "gravel" + | 1 | |
| A | DE - A1 - 2 553 146 (SOCIETE NATIONALE) + Totality + | 1,7 | TECHNICAL FIELDS SEARCHED (Int. Cl.³)<br><br>C 02 F<br>C 09 K<br>B 01 J |
| A | DE - A1 - 2 526 095 (STANDARD OIL) + Totality + | 1,7 | |
| A | US - A - 3 222 412 (MASON) + Totality + | 1,3,7 | |
| A | DE - C - 523 668 (BUNGE) + Totality + | 1,3,7 | CATEGORY OF CITED DOCUMENTS |
| A | GB - A - 922 932 (ULLMANN) + Totality + | 1,3,7 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 16-02-1981 | GRÜNDIG |

EPO Form 1503.1 06.78